# EUROPEAN PATENT APPLICATION

(11) **EP 1 225 766 A2**
(43) Date of publication of application: **24.07.2002**
(21) Application number: 02000476.8
(22) Date of filing: 08.01.2002
(51) Int. Cl.: H04N 7/173

(54) **Viewing history system and apparatus**

(30) Priority: 15.01.2001 JP 2001007075; 27.12.2001 JP 2001396352
(71) Applicant: MATSUSHITA ELECTRIC INDUSTRIAL CO., LTD., Kadoma-shi, Osaka (JP)
(72) Inventor: Nishi, Hiroyuki, Tokyo (JP)
(74) Representative: Grünecker, Kinkeldey, Stockmair & Schwanhäusser Anwaltssozietät

(57) **Abstract**

A viewing history using system that, during collection of personal information of a receiving terminal at a center, enables effective collection and use of only necessary information, and during sending of personal information to the center from the receiving terminal, enables the sending of only user-admitted personal information. The system comprises a data sending part and a receiving terminal to receive data sent from the data sending part, wherein the data sending part to send data to a receiving terminal comprises a personal information collection information creating part that creates and manages personal information collection information specifying a personal information collection range, and a data transmitting part that controls and sends the personal information collection information, and the receiving terminal includes an information collecting part that uses the personal information collection information to determine a personal information collection range in the receiving terminal and collect personal information according to the determination result.

## Description

### BACKGROUND OF THE INVENTION

### Field of the Invention

The present invention relates to an operation history apparatus used mainly in BS digital broadcast, BS data broadcast, CS digital broadcast, terrestrial digital broadcast, or the like.

More particularly, the present invention provides an apparatus that stores information about viewer operations such as the use status of broadcast programs and stored data and sends the information from a receiving apparatus to a center system.

### Description of the Prior Art

Conventionally, viewing histories of television or the like have been collected by a dedicated apparatus. Recently, for contents browsing over the Internet, browsing histories have been collected at a center side. When a dedicated apparatus for television is to be used, the dedicated apparatus has been installed in advance in selected houses to collect viewing histories.

However, the prior art has a problem in that information about viewer operations is related to privacy and viewers cannot know how the information is used. Also, the prior art has a problem in that only the alternative of taking or not operation information is provided so that the operation information to be stored cannot be freely specified at the center side. In addition, the prior art has a problem in that there is no option but whether to return all of collected data to a center system, bringing about an increase in return costs.

### SUMMARY OF THE INVENTION

The present invention solves the problems of the prior art, enables a center system to control operation information to be collected, and enables viewers to provide operation contents to the center system within a range admitted by the viewers.

To achieve the above described objects, a viewing history using system of the present invention is a viewing history using system that uses a transmission line to send and receive data, wherein: a data sending part of the viewing history using system includes a personal information collection information creating part that creates and manages personal information collection information specifying a personal information collection range, and a data transmitting part that controls and sends the personal information collection information; and a receiving terminal to receive the personal information collection information sent from the data sending part includes an information collecting part that uses the personal information collection information to determine a personal information collection range in the receiving terminal and collect personal information according to the determination result.

The present invention is a center system apparatus including a personal information collection information creating part that creates personal information collection information specifying at least one piece of information to be sent to a center for a terminal.

The present invention is also the center system apparatus including a personal information collection information sending part that sends personal information collection information to a terminal.

The present invention is also the center system apparatus wherein the personal information collection information is information describing information to be collected in the terminal.

The present invention is also the center system apparatus wherein the personal information collection information is information describing information about a method of sending information collected in the terminal to the center.

The present invention is also the center system apparatus wherein personal information collection information different for a different terminal can be sent.

The present invention is also a receiving terminal device including an information collecting part that collects terminal information, based on personal information collection information sent from a center.

The present invention is also the receiving terminal device including an information sending part that sends collected information to the center, based on the personal information collection information.

The present invention is also the receiving terminal device wherein information to be collected in the terminal can be specified by a user of the terminal.

The present invention is also the receiving terminal device wherein information to be collected in the terminal is limited to information within a range admitted by the user of the terminal.

The present invention is also the receiving terminal device wherein collected information can be sent to the center again when unsuccessfully sent.

The present invention is also a center system apparatus that processes information sent from a receiver within a range admitted by a user of a terminal.

The present invention is also the center system apparatus wherein processed information is sent to the terminal.

The present invention is also a center system apparatus that includes a database storing information sent from a receiver, and includes a personal information management part that controls access to the database.

The present invention is also a center system apparatus that includes a database storing the results of processing information sent from a receiver, and includes a personal information management part that and controls access to the database.

The present invention is also a viewing history apparatus that pays an information provision fee to a user of a terminal, corresponding to a range admitted by the user of the terminal.

The present invention is also the viewing history apparatus wherein a larger information provision fee is paid for a wider range admitted by the user of the terminal.

The present invention is also a viewing history using system that uses a transmission line to send and receive data, wherein: a data sending part of the viewing history using system comprises a personal information collection information creating part that creates and manages personal information collection information specifying a personal information collection range, and a data transmitting part that controls and sends the personal information collection information; and a receiving terminal to receive the personal information collection information sent from the data sending part comprises an information collecting part that uses the personal information collection information to determine a personal information collection range in the receiving terminal and collect personal information according to the determination result.

The present invention is also the viewing history using system that uses a transmission line to send and receive data, wherein the data sending part of the viewing history using system includes a personal information provision fee control part that pays a personal information provision fee when personal information is provided from the receiving terminal.

The present invention is also the viewing history using system that uses a transmission line to send and receive data, wherein the data sending part of the viewing history using system includes the personal information provision fee control part that pays a personal information provision fee according to a personal information collection range when personal information is provided from the receiving terminal.

The present invention is also the viewing history using system that uses a transmission line to send and receive data, wherein, when sending collected personal information to the data sending part, the receiving terminal adds personal information sending time data as well.

The present invention is also the viewing history using system that uses a transmission line to send and receive data, wherein, when sending the collected personal information to the data sending part, the receiving terminal adds contents address data pointing to the location of a user-accessed information resource as well.

The present invention is also the viewing history using system that uses a transmission line to send and receive data, wherein, when sending the collected personal information to the data sending part, the receiving terminal fetches contents address data collection kind information indicating whether to fetch information perfectly or partially matching the contents address data from the personal information collection information received from the data sending part, and according to the contents address data collection kind information, collects and adds contents address data to the personal information.

The present invention is also the viewing history using system that uses a transmission line to send and receive data, wherein, when sending the collected personal information to the data sending part, the receiving terminal fetches contents address data collection type information indicating whether to fetch information matching or not matching the contents address data from the personal information collection information received from the data sending part, and according to the contents address data collection type information, collects and adds contents address data to the personal information.

The present invention is also the viewing history using system that uses a transmission line to send and receive data, wherein, when sending the collected personal information to the data sending part, the receiving terminal adds user identification data indicating who accessed contents data indicated by the contents address data as well.

The present invention is also the viewing history using system that uses a transmission line to send and receive data, wherein the data sending part of the viewing history using system includes a personal information provision status information creating part that, when personal information is provided from the receiving terminal, creates and manages personal information provision status information indicating a personal information provision status.

The present invention is also a viewing history using system that uses a transmission line to send and receive data, wherein a data sending part to send data to a receiving terminal comprises a personal information collection information creating part that creates and manages personal information collection information specifying a personal information collection range, and a data transmitting part that controls and sends the personal information collection information.

The present invention is also the viewing history using system that uses a transmission line to send and receive data, wherein the data sending part includes a personal information provision fee control part that pays a personal information provision fee when personal information is provided from the receiving terminal.

The present invention is also the viewing history using system that uses a transmission line to send and receive data, wherein the data sending part includes the personal information provision fee control part that pays a personal information provision fee according to a personal information collection range when personal information is provided from the receiving terminal.

The present invention is also the viewing history using system that uses a transmission line to send and receive data, wherein the data sending part includes a personal information provision status information creating part that, when personal information is provided from the receiving terminal, creates and manages personal information provision status information indicating a personal information provision status.

The present invention is also a viewing history using system that uses a transmission line to send and receive data, wherein a receiving terminal to receive personal information collection information specifying a range of collecting personal information sent from the data sending part includes an information collecting part that uses the personal information collection information to determine a personal information collection range in the receiving terminal and collect personal information according to the determination result.

The present invention is also the viewing history using system that uses a transmission line to send and receive data, wherein, when sending collected personal information to the data sending part, the receiving terminal adds personal information sending time data as well.

The present invention is also the viewing history using system that uses a transmission line to send and receive data, wherein, when sending the collected personal information to the data sending part, the receiving terminal adds contents address data pointing to the location of a user-accessed information resource as well.

The present invention is also the viewing history using system that uses a transmission line to send and receive data, wherein, when sending the collected personal information to the data sending part, the receiving terminal fetches contents address data collection kind information indicating whether to fetch information perfectly or partially matching the contents address data from the personal information collection information received from the data sending part, and according to the contents address data collection kind information, collects and adds contents address data to the personal information.

The present invention is also the viewing history using system that uses a transmission line to send and receive data, wherein, when sending the collected personal information to the data sending part, the receiving terminal fetches contents address data collection type information indicating whether to fetch information matching or not matching the contents address data from the personal information collection information received from the data sending part, and according to the contents address data collection type information, collects and adds contents address data to the personal information.

The present invention is also the viewing history using system that uses a transmission line to send and receive data, wherein, when sending the collected personal information to the data sending part, the receiving terminal adds user identification data indicating who accessed contents data indicated by the contents address data as well.

According to the present invention, advantageously, when personal information of a receiving terminal is collected at a center, only necessary information can be efficiently collected and used.

Moreover, when personal information is sent to the center from the receiving terminal, only user-admitted personal information can be sent.

Therefore, an object of the present invention is to provide a viewing history using system that enables personal information of a receiving terminal to be collected at a center and enables only necessary information of the personal information to be efficiently collected and used.

A second object of the present invention is to provide a viewing history using system that enables personal information to be sent to a center from a receiving terminal, and enables only user-admitted personal information to be sent to the center from the receiving terminal.

A third object of the present invention is to provide a receiving terminal that can send personal information to a center in response to a request from the center, and can efficiently send the personal information and can send only user-admitted personal information.

The objects and advantages of the present invention will become more apparent from embodiments described below with reference to the accompanying drawings.

### BRIEF DESCRIPTION OF THE DRAWINGS

FIG. 1 is a block diagram showing the configuration of an entire system according to a preferred embodiment of the present invention;
FIG. 2 is a block diagram showing the configuration of a center system used in the embodiment;
FIG. 3 is a block diagram showing the configuration of a receiver used in the embodiment;
FIG. 4 is a diagram showing an example of embodying a contents DB used in the embodiment;
FIG. 5 is a diagram showing an example of embodying a contents meta-information DB used in the embodiment;
FIG. 6 is a diagram showing an example of embodying a contents sending schedule DB used in the embodiment;
FIG. 7 is a diagram showing an example of embodying a personal information collection information sending schedule DB used in the embodiment;
FIG. 8 is a diagram showing an example of embodying a personal information provision information sending schedule DB used in the embodiment;
FIG. 9 is a diagram showing an example of embodying a user information sending schedule DB used in the embodiment;
FIG. 10 is a diagram showing a first example of embodying personal information collection information sent from a broadcasting station or center system to a receiver in the embodiment;
FIG. 11 is a diagram showing a second example of embodying personal information collection information sent from a broadcasting station or center system to a receiver in the embodiment;
FIG. 12 is a diagram showing a third example of embodying personal information collection information sent from a broadcasting station or center system to a receiver in the embodiment;
FIG. 13 is a diagram showing a common example of embodying personal information and a personal information DB sent from a receiver to a broadcasting station or center system in the embodiment;
FIG. 14 is a diagram showing an example of embodying personal information, and history information of a personal information DB used in the embodiment;
FIG. 15 is a diagram showing an example of embodying personal information, and system messages of a personal information DB used in the embodiment;
FIG. 16 is a diagram showing an example of embodying personal information, and remote control operations of a personal information DB used in the embodiment;
FIG. 17 is a diagram showing another example of embodying personal information sent from a receiver to a broadcasting station or center system in the embodiment;
FIG. 18 is a diagram showing an example of embodying contract information of a customer DB used in the embodiment;
FIG. 19 is a diagram showing an example of embodying personal information of a customer DB used in the embodiment;
FIG. 20 is a diagram showing an example of embodying a receiver DB used in the embodiment;
FIG. 21 is a diagram showing an example of embodying an information provider DB used in the embodiment;
FIG. 22 is a diagram showing an example of embodying user information and a user information DB used in the embodiment;
FIG. 23 is a diagram showing an example of embodying user information and a user information DB used in the embodiment;
FIG. 24 is a diagram showing an example of embodying personal information provision information and a personal information provision information DB used in the embodiment;
FIG. 25 is a diagram showing an example of embodying personal information provision status information used in the embodiment; and
FIG. 26 is a flowchart for explaining the operation of an entire system according to the embodiment.

### DESCRIPTION OF THE PREFERRED EMBODIMENTS

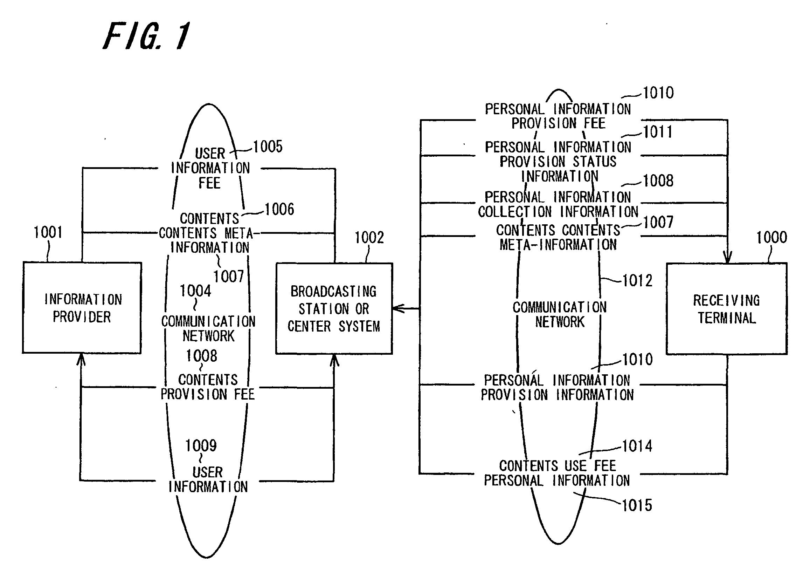

Next, preferred embodiments of the present invention will be described in accordance with the accompanying drawings. FIG. 1 is a block diagram showing the configuration of an entire system according to a preferred embodiment of the present invention.

An information provider 1001 is a business entity that provides contents 1006 provided to a receiver 1003 by a broadcasting station or center system 1002, and receives provision of user information 1009 from the business entity of the broadcasting station or center system. The business entities may be not companies but also individuals or various organizations.

The information provider 1001 may only provide the contents 1006 without receiving provision of the user information 1009. The information provider 1001 may only receive provision of the user information 1009 without providing the contents 1006. There may be plural information providers 1001. The broadcasting station or center system 1002 receives provision of the contents 1006 from the information provider 1001, or contents are produced in the broadcasting station or center system 1002 and the contents 1006 are sent to the receiver 1003 via a communication network 1004. The broadcasting station or center system 1002 processes and compiles personal information 1015 provided from the receiver 1003 and provides the user information 1009 to the information provider 1001. There may be plural broadcasting station or center systems 1002.

The receiver 1003 includes all user-operable devices without being limited to broadcast receivers and CATV receivers. Examples of the receiver 1003 include facsimile, telephone, audio devices, microwave heating, and refrigerator. User-inoperable devices that can send the status of the devices to the broadcasting station or center system are also included. There may be plural receivers 1003.

The communication network 1004 is a communication network for linking the broadcasting station or center system 1002 and the receiver 1003 and is not limited to broadcasting, CATV, public network, and the Internet in the present invention. The communication network 1004 need not be single but may be plural. Part of information may be sent by mail because of a contract such as paper.

User information fee 1005 is a compensation for the user information 1009 provided to the information provider 1001 from the business entity of the broadcasting station or center system 1002. Usually, the user information 1009 is stipulated in advance by a contract for user information provided between the business entity of the broadcasting station or center system 1002 and the information provider 1001, and the information provider 1001 pays the user information fee 1005 to the business entity of the broadcasting station or center system 1002, based on the contract. The contents 1006 include all data usable in the receiver without being limited to broadcast images, voice, and data contents. Example of the contents 1006 include telephone books, address directories, receipts, music files, and the like.

Contents meta-information 1007 is information on the contents 1006 and includes, for example, the genre, contents, broadcast time, contents size, target user, storage location, storage method, valid time, discard time, copyright information, and existence of information collection target. The contents meta-information 1007 includes contents meta-information created by the information provider 1001 and contents meta-information created by the broadcasting station or center system. Usually, the contents meta-information 1007 exists for the contents 1006, but there may be contents 1006 not having the contents meta-information 1007.

Contents provision fee 1008 is a compensation for the contents 1006 provided to the business entity of the broadcasting station or center system 1002 from the information provider 1001. Usually, the contents 1006 are stipulated in advance by a contract for the contents 1006 provided between the information provider 1001 and the business entity of the broadcasting station or center system 1002, and the business entity of the broadcasting station or center system 1002 pays the contents provision fee 1008 to the information provider 1001, based on the contract.

The user information 1009 is information processed in the broadcasting station or center system 1002, based on the personal information 1015 collected from the receiver 1003. Usually, for the processing, a processing method is prescribed in advance by a contract between the business entity of the broadcasting station or center system 1002 and a user, and the business entity of the broadcasting station or center system 1002 pays a personal information provision fee 1010 to the user, based on the contract. The processing is, for example, extracting personal preference based on personal information; the extraction method is especially not defined in the present invention.

The personal information provision fee 1010 is a compensation for the personal information 1015 provided to the business entity of the broadcasting station or center system 1002 from the user of the receiver 1003. Usually, the personal information 1015 is stipulated in advance by a contract for the personal information 1015 provided between the user of the receiver 1003 and the business entity of the broadcasting station or center system 1002, and the business entity of the broadcasting station or center system 1002 pays the personal information provision fee 1010 to the user of the receiver 1003, based on the contract.

Personal information provision status information 1011, which is information about the personal information 1015 used in the broadcasting station or center system 1002, is presented in response to a request from the user of the receiver 1003. It is assumed that the personal information provision status information 1011 is stored in advance in the receiver 1003 to respond immediately to a user's presentation request by personal information provision information 1013. However, the personal information provision status information 1011 need not be stored in the receiver 1003 if it may be sent to the receiver 1003 upon a request from the user. The personal information provision status information 1011 may be presented to a monitor connected to the receiver 1003, copied to an external storage unit, or printed to a printer. The present invention limits no presentation method.

Personal information collection information 1012 is information about information to be collected in the receiver 1003. For example, information is included of whether only contents used by the user are collected, all operations are collected, only operations in specific time zones are collected, several operations before and after specific operations are collected, when and where collected data is sent, and what processing is to be performed when a personal information DB 3010 of the receiver is likely to overflow. This makes it possible to control information to be collected in the receiver 1003.

The personal information provision information 1013 is information for the user of the receiver 1003 to define personal information 1015 provided to the business entity of the broadcasting station or center system 1002. Usually, the personal information provision information 1013 is defined by online registration or contract. The personal information provision information 1013 is, for example, information defined about the personal information 1015 permitted for collection by the receiver, a method of processing the personal information 1015 collected by the business entity of the broadcasting station or center system 1002, and disclosure of the processed information to a third party (information provider).

A contents use fee 1014 is a cost paid to the business entity of the broadcasting station or center system 1002 from the user when using (viewing) contents by the receiver 1003.

The personal information 1015 includes information about the user of the receiver 1003 such as, e.g., name, family structure, birth date, address, and telephone number, and operation information in the receiver 1003 such as, e.g., user's operation history, viewing history, contents use history, and power-on time. The operation history is information indicating, for example, when and what operations who of the user performed by the receiver. The viewing history is information indicating, for example, in what time range who viewed which of broadcast programs. The contents use history is information indicating when who used which of contents stored in the receiver. However, the personal information 1015 is not limited to these information items. The contents use fee, user information fee, contents provision fee, and personal provision information fee usually denote money or things having money value. The contents use fee, user information fee, contents provision fee, and personal provision information fee may be free of charge.

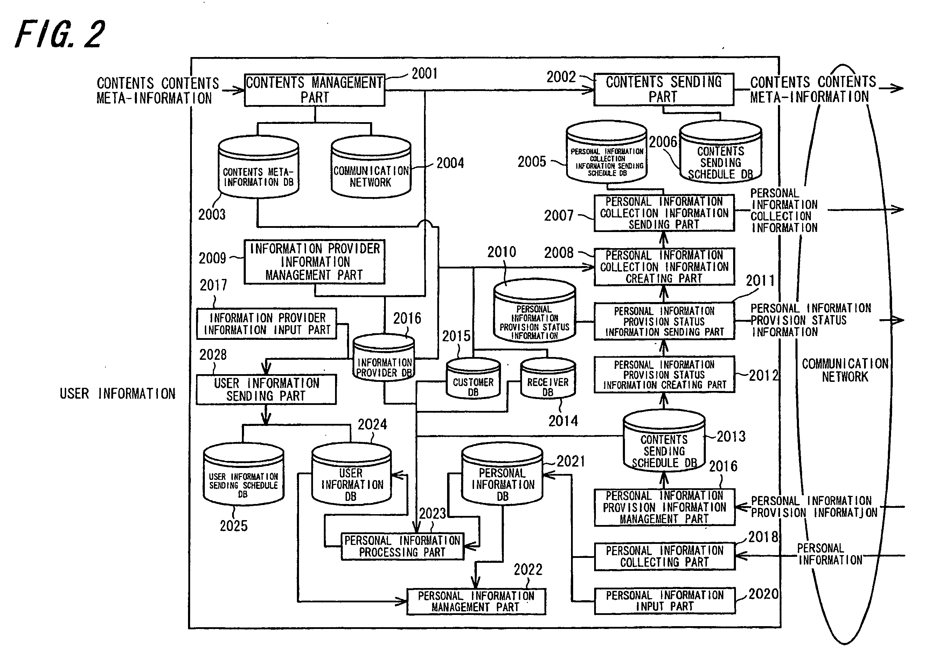

FIG. 2 is a diagram showing the configuration of a broadcasting station or center system 1002. A contents management part 2001 manages contents registered from the information provider 1001. The contents may be registered directly via the network or registered from CD-ROM, DVD-ROM, or the like. If necessary, a contents input part not shown in the drawing may be provided for input from a keyboard or the like. The contents management part 2001 registers contents in a contents DB 2004 and contents meta-information corresponding to the contents in a contents meta-information DB 2003. The contents management part 2001 not only registers contents but also registers contents and contents meta-information in a contents sending part 2002 that actually sends contents. The contents management part 2001 can add and change contents meta-information corresponding to contents registered from the information provider 1001. A contents meta-information editing part, although not shown in the drawing, may exist to add, modify, or delete contents meta-information. The contents management part 2001, according to a contract with the information provider 1001, performs maintenance such as deletion of specific contents and contents meta-information from the contents DB 2004 and the contents meta-information DB2003 when a specified date has passed.

The contents sending part 2002 sends contents managed by the contents management part 2001 to the receiver 1003. Information required for the sending is stored in a contents sending schedule DB 2006. Data sent from the contents sending part 2002 may be decided by the contents sending part 2002, or a sending schedule and sending specifications (bandwidth, sending repetition count, etc.) may be passed to the contents management part 2001 so that it decides what contents to send at what timing according to the contents sending schedule. The contents sending part 2002 sends the contents after conversion to a format suitable for a communication network 1004 to send the contents to. For example, for broadcasting, the contents are converted to a broadcast format (e.g., carousel format). Contents to be sent are decided taking sending limitations for each of information providers registered in an information provider DB 2016 into account.

The contents meta-information DB 2003 is a database that stores contents meta-information received by the contents management part 2001. The contents DB 2004 is a database that stores contents the contents management part 2001 receives from the information provider 1001.

A personal information collection information sending schedule DB 2005 is a database that stores schedules of sending from a personal information collection information sending part 2007, and information about the communication network 1004. For example, for broadcasting, the following information is stored: over which network and which transponder sending is to be made through which channel with how wide bandwidth (Mbps) in what time range, and repetition count during personal information collection information sending. For the Internet, the following information is stored: when sending is to be made to which address with what protocol, and action to be taken when a communication path cannot be established (e.g., how many minutes elapse before resending). A personal information collection information sending schedule input part, although not shown in the drawing, may exist to register schedule information in the personal information collection information sending schedule DB 2005. The personal information collection information sending schedule input part may receive schedules from other systems via the network and register them in the personal information collection information sending schedule DB 2005, or may receive schedules from a keyboard, remote control, CD-ROM, DVD-ROM, and the like, and register them in the personal information collection information sending schedule DB 2005. A personal information collection information schedule check part, although not shown in the drawing, may exist to check whether there is no contradiction in registered personal information collection information schedule information (whether there is a schedule specifying that sending is made to a same destination from a same network at a same time zone).

The contents sending schedule DB 2006 is a database that stores schedules of sending from a contents sending part 2002, and information about the communication network 1004. For example, for broadcasting, the following information is stored: over which network and which transponder sending is to be made through which channel with how wide bandwidth (Mbps) in what time range, and repetition count during contents sending. For the Internet, the following information is stored: when sending is to be made to which address with what protocol, and action to be taken when a communication path cannot be established (e.g., how many minutes elapse before resending). A contents sending schedule input part, although not shown in the drawing, may exist to register schedule information in the contents sending schedule DB 2006. The contents sending schedule input part may receive schedules from other systems via the network and register them in the contents sending schedule DB 2006, or may receive schedules from a keyboard, remote control, CD-ROM, DVD-ROM, and the like, and register them in the contents sending schedule DB 2006. A contents schedule check part, although not shown in the drawing, may exist to check whether there is no contradiction in registered contents schedule information (whether there is a schedule specifying that sending is made to a same destination from a same network at a same time zone), or determine whether there is no contradiction between the data amount of contents to be sent and a sending schedule registered in the contents sending schedule DB 2006 (whether the amount of data that must be sent until a given time exceeds a sendable data amount of a schedule to be sent until the time), through comparison with the contents of the contents meta-information DB managed by the contents management part.

The personal information collection information sending part 2007 sends personal information collection information created by a personal information collection information creating part 2008 to the receiver 1003. Information required for the sending is stored in a personal information collection information sending schedule DB 2006. Data sent from the personal information collection information sending part 2007 may be decided by the personal information collection information sending part 2007, or a sending schedule and sending specifications (bandwidth, sending repetition count, etc.) may be passed to the personal information collection information creating part 2008 so that it decides what personal information collection information to send at what timing according to the personal information collection information sending schedule. The personal information collection information sending part 2007 sends the information after conversion to a format suitable for a communication network to send the information to. For example, for broadcasting, the information is converted to a broadcast format (e.g., carousel format, section format).

The personal information collection information creating part 2008 creates personal information collection information, based on the contents of at least one DB of the contents meta-information DB 2003, the information provider DB 2016, a customer DB 2015, and a receiver DB 2014, and passes created information to the personal information collection information sending part 2007. For example, the customer DB 2015 may be searched using, as keys, information such as specific age, age layer, sex, specific hobby, location, birthstone, and the like to extract users whose personal information is to be collected. For example, users owning a receiver of a specific manufacturer whose personal information is to be collected may be extracted by searching the receiver DB 2014. For example, personal information may be collected based on only contents provided by specific information providers.

An information provider information management part 2009 manages the information provider DB 2016. For example, it checks whether there is no contradiction in the information provider DB 2016, or deletes unnecessary information. In a system in which contents are sent and stored in a storage unit of the receiver 1003, a check is made to see if there is no contradiction between the storage capacity of the receiver and a storage capacity specified in a contract with an information provider (whether the contract is made beyond the storage capacity).

The personal information provision information sending schedule DB 2010 is a database that stores schedules of sending from a personal information provision information sending part 2011, and information about the communication network 1004. For example, for broadcasting, the following information is stored: over which network and which transponder sending is to be made through which channel with which bandwidth (Mbps) in what time range, and repetition count during personal information provision information sending. For the Internet, the following information is stored: when sending is to be made to which address with what protocol, and action to be taken when a communication path cannot be established (e.g., how many minutes elapse before resending). A personal information provision information sending schedule input part, although not shown in the drawing, may exist to register schedule information in the personal information provision information sending schedule DB 2010. The personal information provision information sending schedule input part may receive schedules from other systems via the network and register them in the personal information provision information sending schedule DB 2010, or may receive schedules from a keyboard, remote control, CD-ROM, DVD-ROM, and the like, and register them in the personal information provision information sending schedule DB 2010. A personal information provision information schedule check part, although not shown in the drawing, may exist to check whether there is no contradiction in registered personal information provision information schedule information (whether there is a schedule specifying that sending is made to a same destination from a same network at a same time zone).

The personal information provision status information sending part 2011 sends personal information collection information created by a personal information provision status information creating part 2012 to the receiver. Information required for the sending is stored in a personal information provision status information sending schedule DB 2010. Data sent from the personal information provision status information sending part 2011 can be decided by the personal information provision status information sending part 2011 itself. However, it can be decided by other methods. For example, a sending schedule and sending specifications (bandwidth, sending repetition count, etc.) may be passed to the personal information provision status information creating part 2012 so that it decides what personal information provision status information to send at what timing according to the personal information provision status information sending schedule. The personal information provision status information sending part 2011 sends the information after conversion to a format suitable for a communication network to send the information to. For example, for broadcasting, the information is converted to a broadcast format (e.g., carousel format, section format).

The personal information provision status information creating part 2012 creates personal information provision status information at a predetermined timing or when requested, based on the contents of a personal information provision information DB 2013. Created information is passed to the personal information provision status information sending part 2011. In the case where personal information provision status information is created at a predetermined timing, although not shown in the drawing, a personal information provision status information creation control part and a personal information provision information creation schedule DB for managing schedules may exist. Also, a personal information provision information creation schedule input part for inputting schedules may exist. Where the personal information provision information creation control part exists, a schedule inputted from the personal information provision information creation schedule input part is stored in the personal information provision information creation schedule DB, and the personal information provision status information control part, according to the schedule, directs the personal information provision status information creating part 2012 to create personal information provision status information.

The personal information provision information DB 2013 is a database that stores personal information provision information registered from a personal information provision information management part 2018. It also stores the results of contents processed in a personal information processing part 2023. Contents processed in the personal information processing part 2023 may be managed in a different database.

The receiver DB 2014 is a database that stores information of the receiver 1003. For example, manufacturer, model number, product number of the receiver, and other information are stored. Although not shown in the drawing, a receiver DB input part may exist to register receiver information in the receiver DB 2014. The receiver DB input part may receive receiver information from other systems via the network and register it in the receiver DB 2014, or may receive receiver information from a keyboard, remote control, CD-ROM, DVD-ROM, and the like, and register it in the receiver DB 2014. A receiver DB check part, although not shown in the drawing, may exist to check whether there is no contradiction in registered receiver information (a different production number system for a same manufacturer and a same model number, etc.).

The customer DB 2015 is a database that stores information of the user of the receiver 1003, such as, e.g., customer address, telephone number, family structure, occupation, and hobby. Although not shown in the drawing, a customer DB input part may exist to register receiver information in the customer DB 2015. The customer DB input part may receive customer information from other systems via the network and register it in the customer DB 2015, or may receive customer information from a keyboard, remote control, CD-ROM, DVD-ROM, and the like, and register it in the customer DB 2015. A customer DB check part, although not shown in the drawing, may exist to check whether there is no contradiction in registered customer information.

The information provider DB 2016 is a database that stores information inputted from an information provider information input part 2017. Specifically, the information includes information provider's information (company name, location, contract term, etc.), information of contents provided by information provider (maximum contents size, maximum size of one contents, etc.), contents registering method (via network or media, etc.), and information about user (provision term, provision contents, contract contents, and provision amounts).

The information provider information input part 2017 inputs information of the information provider 1001 to the information provider DB 2016. It may be inputted to the information provider information input part directly from a keyboard or remote control or via the network or from a file such as CD-ROM and DVD-ROM. The personal information provision information management part 2018 stores personal information provision information from the receiver 1003 in the personal information provision information DB 2013. If necessary, the personal information provision information management part 2018 may request the receiver 1003 to send personal information provision information.

A personal information collecting part 2019 stores personal information from the receiver 1003 in the personal information DB 2021. If necessary, the personal information collecting part 2019 may request the receiver 1003 to send personal information. Although not shown in the drawing, an information provision fee control part may exist to calculate a personal information provision fee. The information provision fee control part may, for example, calculate a personal information fee in proportion to the data size of personal information from the receiver 1003, or may decide costs for each customer by consulting the customer DB 2015. The information provision fee control part may decide costs for each of terminal types by consulting the receiver DB 2014, or may decide costs for each of information providers included in personal information by consulting the information provider DB 2016. A combination of one or more of the above described cost deciding methods may be used to calculate costs. Further, fixed amounts may be charged regardless of the contents of personal information. A personal information input part 2020 is an input part for registering in the personal information DB 2021 information that is required to process personal information and cannot be obtained from information from the receiver 1003, such as inquiry information by phone and questionnaire results by phone and postcard. The information may be inputted from a keyboard, or registered from CD-ROM, DVD-ROM, or the like. The personal information DB 2021 is a database that stores data inputted from the personal information collecting part 2019 or personal information input part 2020.

A personal information management part 2022 performs access control and access recording management for at least one database of the personal information DB 2021 and a user information DB 2024. Personal information has a high degree of secret and requires a high degree of security. Therefore, the personal information management part 2022 is required to provide security for the personal information DB 2021 and the user information DB 2024. The personal information management part 2022 manages information necessary for security management (when, from where, who referred to which data), including the contents and results of all accesses to the personal information DB 2021 and the user information DB 2024. Records of the accesses, access limitation information, and the like are stored in a personal information management DB (not shown). The personal information management part 2022 may be provided with an alarm sending part for issuing an alarm or contacting a manager if necessary, upon detection of an invalid access. The personal information management part 2022 may separately manage the personal information DB and the user information DB, or may commonly manage them by one database.

The personal information processing part 2023 performs conversion to data of the format of user information registered in the information provider DB 2016, based on the contents of the personal information DB 2021, the customer DB 2015, and the receiver DB 2014. For example, if the data that the number of accesses to specific contents in a given period is provided to the information provider 1001 is registered in the information provider DB 2016, the personal information processing part 2023 extracts information of reference to the pertinent contents from the personal information DB 2021, calculates an access count, and registers the result in a user information DB 2024. Also, for example, if the data that the number of users interested in baseball is extracted from a personal information DB is registered in the information provider DB 2016, the personal information processing part 2023 searches the contents of the personal information DB 2021, the customer DB 2015, and the receiver DB 2014, and calculates the number of users who accessed. contents related to baseball. The present invention does not limit how interest in baseball is extracted from the personal information DB 2021, the customer DB 2015, and the receiver DB 2014. There may be an inference part making inferences for extraction and an inference DB managing rules for inference. The personal information processing part 2023, if necessary, registers information about how the personal information provision information DB 2013 corresponding to personal information used for processing results was referred to, for example, information about search for the number of accesses to certain contents. The user information DB 2024 is a database that stores user information sent to the information provider 1001.

The user information sending schedule DB 2025 is a database that stores schedules of sending from a user information sending part 2026, and information about the communication network 1004. For example, for the Internet, the following information is stored: when sending is to be made to which address with what protocol, and action to be taken when a communication path cannot be established (e.g., how many minutes elapse before resending). A user information sending schedule input part, although not shown in the drawing, may exist to register schedule information in the user information sending schedule DB 2025, or the schedule information may be registered in the information provider DB 2016. The user information sending schedule input part may receive schedules from other systems via the network and register them in the user information sending schedule DB 2025, or may receive schedules from a keyboard, remote control, CD-ROM, DVD-ROM, and the like, and register them in the user information sending schedule DB 2025. A user information schedule check part, although not shown in the drawing, may exist to check whether there is no contradiction in registered user information schedule information (whether there is a schedule specifying that sending is made to a same destination from a same network at a same time zone).

The user information sending part 2026 sends the contents of the user information DB 2024 to the information provider 1001 or the user of user information. Information required for the sending is stored in the user information sending schedule DB 2025. Data sent from the user information sending part 2026 may be decided by the user information sending part 2026, or a sending schedule and sending specifications (bandwidth, sending repetition count, etc.) may be passed to the personal information processing part 2023 so that it decides what user information to send at what timing according to the user information sending schedule. The user information sending part 2026 sends the information after conversion to a format suitable for a communication network to send the information to. Where information is provided on paper without using a communication network, the user information sending part 2026 prints user information at a time preset in the user information sending schedule DB. The contents sending part 2002, the personal information collection information sending part 2007, and the personal information provision status information. sending part 2012 are collectively referred to as a data sending part.

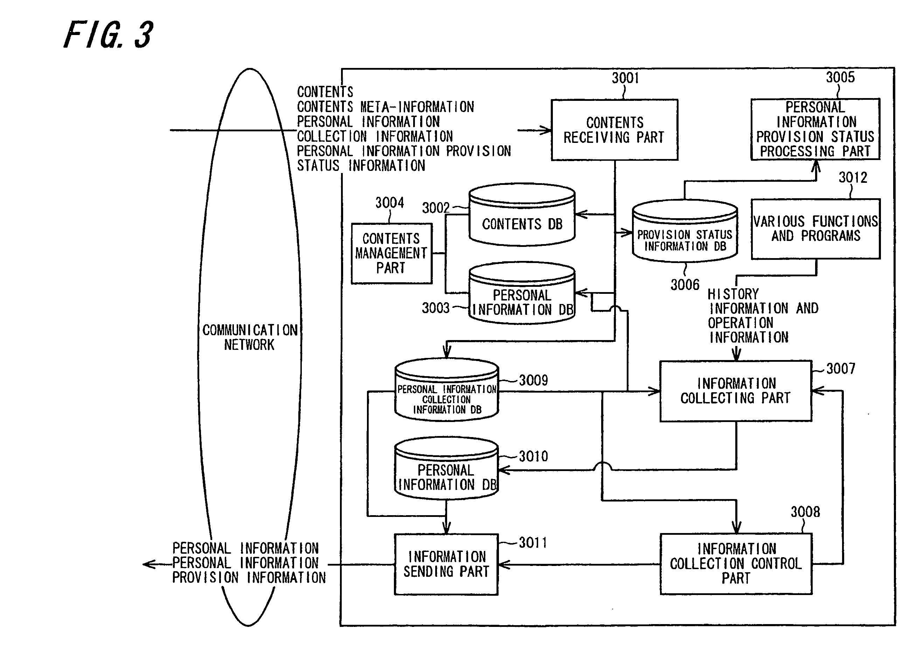

FIG. 3 is a diagram showing the configuration of the receiver 1003. A contents receiving part 3001 receives at least one of contents, contents meta-information, personal information collection information, and personal information provision status information. The contents receiving part 3001 stores received information in individual databases according to the contents of the received information. The individual databases may respectively exist separately or plural databases may be managed by one database. A contents DB 3002 is a database that stores contents received by the contents receiving part 3001. Although not shown in the drawing, contents may be registered directly in the contents DB. For example, contents may be registered in the contents DB 3002 from CD-ROM, DVE-ROM, or the like.

A contents meta-information DB 3003 is a database that stores contents meta-information received by the contents receiving part 3001. Although not shown in the drawing, contents meta-information may be registered directly in the contents meta-information DB 3003. For example, contents meta-information may be registered in the contents meta-information DB 3003 directly from a keyboard, remote control, CD-ROM, DVD-ROM, and the like. A contents management part 3004 manages the contents DB 3002 and the contents meta-information DB 3003. The contents management part 3004 stores contents received by the contents receiving part 3001 in the contents DB 3002 according to a storage location and storage method specified in corresponding contents meta-information.

If no storage location and storage method are specified in corresponding contents meta-information, the contents management part 3004 automatically decides a storage location and storage method to store contents in the contents DB 3002. Although not shown in the drawing, whenever stored contents are presented to the user of the receiver, a contents presenting part to present the contents refers to the contents through the contents management part 3004. Where operations are to be performed on stored contents, a contents operation part not shown also operates the contents through the contents management part 3004. When contents are specified from other contents presenting part, contents operation part, or the like, the contents management part 3004 refers to contents meta-information corresponding to the specified contents, and passes the contents to the contents presenting part, the contents operation part, or the like only when conditions are satisfied as a result of comparison of valid time, target user, and the like. The contents management part 3004 refers to discard time specified in contents meta-information and deletes contents exceeding the discard time from a contents DB in the receiver.

A personal information provision status processing part 3005 is used from a personal information provision status input part through which a user requests personal information provision status, and a personal information provision status presenting part that presents personal information provision status, which are not shown in the drawing. When a user wants to know how his (her) personal information is used, the user inputs necessary information from the personal information provision status input part, such as, e.g., a period in which to know a status, kind of information to be checked, and the like. If necessary, some input patterns may be registered in the personal information provision status input part so that the user selects from among them to input necessary information. The inputted information is passed to the personal information provision status processing part 3005 from the personal information provision status input part. The personal information provision status processing part refers to a provision status information DB 3006 if present, and if not present or if no necessary information exists in the provision status information DB 3006, a request to obtain personal information provision status information is sent to the center from an information sending part 3011, information from the center is received in the contents receiving part 3001, the received information is stored if the provision status information DB 3006 exists or if necessary, and it is presented to the user through the personal information provision status presenting part via the personal information provision status processing part 3005. The personal information provision status processing part 3005 manages the provision status information DB 3006. Specifically, to prevent the provision status information DB 3006 from overflowing, some priority is provided for the stored information. As one example, information with lower priorities is deleted earlier to prevent the provision status information DB 3006 from overflowing. The term "some priority" refers to, e.g., the order of storage time, the order of reference time, and the like.

An information collecting part 3007 compares user the operation status of operations and functions passed from various functions and programs 3012 with the contents of a personal information collection information DB 3009, and stores necessary information in a personal information DB 3010. Although, in the present invention, personal information collection and operation comparison are performed in the information collecting part 3007 to integrate processing, comparison with the contents of the personal information collection information DB 3009 may be performed in the various functions and programs 3012, and only necessary information may be sent to the information collecting part 3007 so that it stores all the information in the personal information DB 3010. The information collecting part 3007 may add time information, user identification information, and the like to information from the various functions and programs 3012. If only the number of accesses is to be collected, the information collecting part 3007 may read relevant previous information from the personal information DB 3010, update it, and register the updated information in the personal information DB 3010. Information to be collected is not limited to the operation status of user operations and functions. For example, information unrelated to user operations such as error messages and alarm information outputted from various functions and programs is also targeted in the present invention. The information collecting part 3007 may not register information in the personal information DB 3010 until a specified size or amount of information has been stored in an intermediate storage area, at which time the information is registered in the personal information DB 3010, thereby shortening time of registration to the personal information DB 3010 and reducing loads on other programs.

An information collection control part 3008 controls the information collecting part 3007 and the information sending part 3011. For example, when it is specified that a viewing history is collected only in a specific time zone by personal information collection information, the information collection control part 3008 commands the information collecting part 3007 to start or stop information collection. If information collection is stopped, the information collecting part 3007 discards information such as the operation status of operations and functions from the various functions and programs 3012 without storing it in the personal information DB 3010. The information collection control part 3008 controls the information sending part 3011 so as to report personal information to the center according to predetermined information managed by the information collection control part 3008 and information stored in the personal information collection information DB 3009. For example, when a time specified in the personal information collection information DB 3009 is reached, a communication network may be established by a call from the receiver to send data, and if necessary, the data may be compressed or the data may be compiled only to obtain access count. Where no collection time is specified in personal information collection information, sending may be performed upon a call from the center. In the information sending part 3011, data may be processed, e.g., for conversion to an information amount of only access count. The information collection control part 3008 monitors the status of the personal information DB 3010, and when the amount of free space of the personal information DB 3010 becomes less than a predetermined capacity or a capacity specified in the personal information collection information DB 3009, the information collection control part 3008 may request the information sending part 3011 to perform sending.

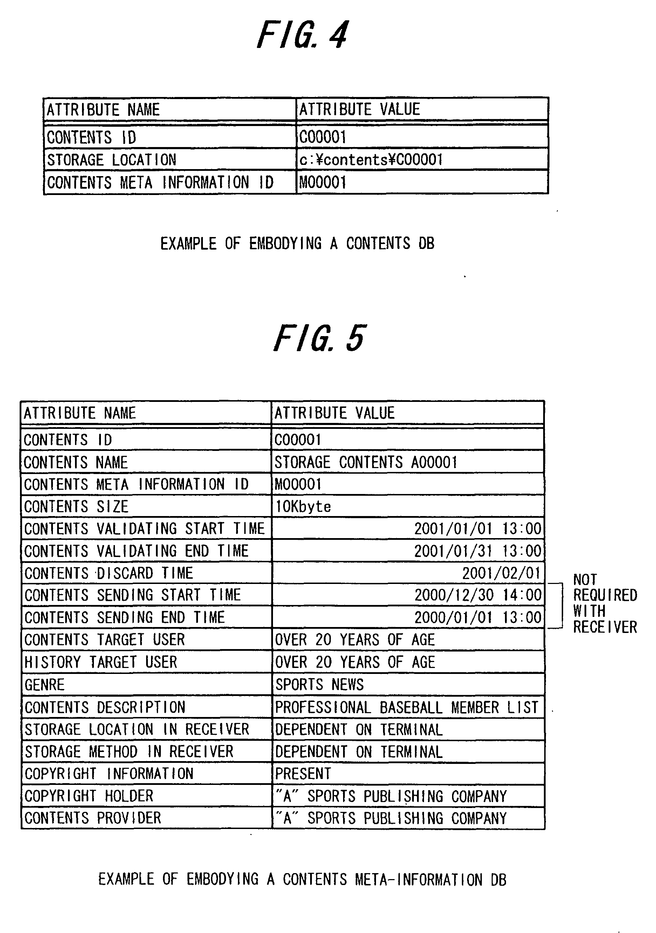

FIG. 4 is a drawing showing an example of embodying the contents DB 2004 in the broadcasting station or center system 1002, and the contents DB 3002 in the receiver 1003. A contents DB and a contents meta-information DB are associated by at least a contents ID or contents meta-information ID. A storage location is a value indicating the location in which contents are actually stored.

FIG. 5 is a drawing showing an example of embodying the contents meta-information DB 2003 in the broadcasting station or center system 1002, and the contents DB 3003 in the receiver 1003. In the case of the contents DB 3003 in the receiver 1003, a contents sending start time and a contents sending end time may not be included in the attribute name field.

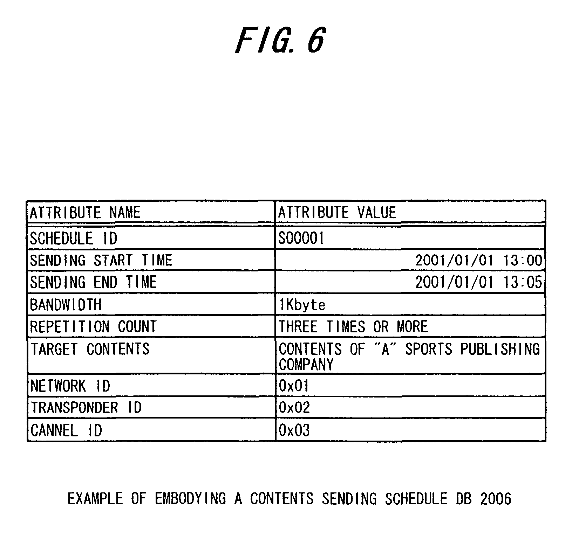

FIG. 6 is a diagram showing an example of embodying a contents sending schedule DB 2006 in the broadcasting station or center system 1002. This example shows a contents sending schedule DB in the case where the communication network 1004 is a broadcasting network. The example of FIG. 6 shows that an information provider can send only contents of sports publishing company A, with network ID of 0x01, transponder ID of 0x02, and channel ID of 0x03, in a bandwidth of 1Mbps in a range between 2001/01/01 13:00 and 13:05.

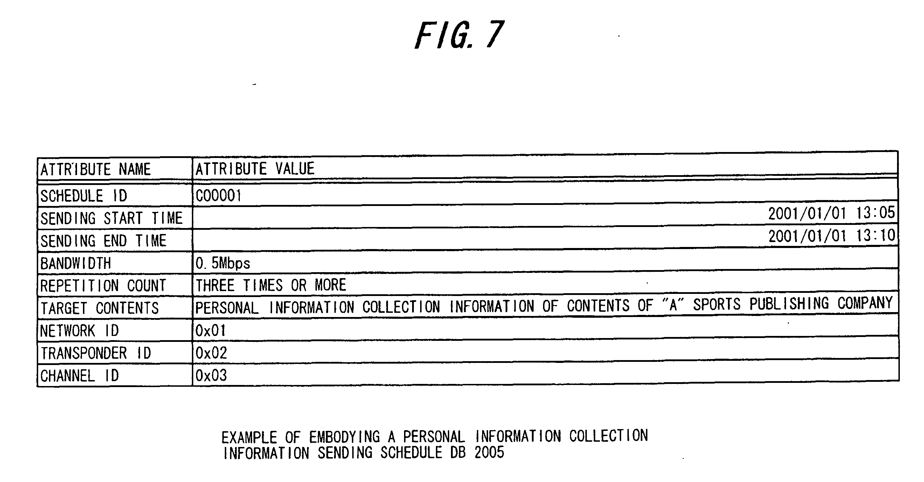

FIG. 7 is a diagram showing an example of embodying a personal information collection information sending schedule DB 2005 in the broadcasting station or center system 1002. This example shows a personal information collection information sending schedule DB in the case where the communication network 1004 is a broadcasting network. The example of FIG. 7 shows that an information provider can send only personal information collection information of contents of sports publishing company A, with network ID of 0x01, transponder ID of 0x02, and channel ID of 0x03, in a bandwidth of 0.5Mbps in a range between 2001/01/01 13:05 and 13:10.

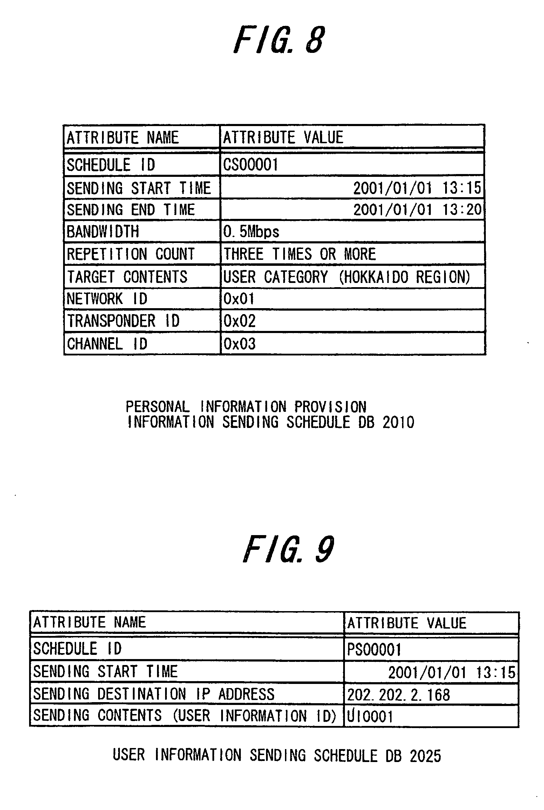

FIG. 8 is a diagram showing an example of embodying a personal information provision information sending schedule DB 2010 in the broadcasting station or center system 1002. This example shows a personal information provision information sending schedule DB in the case where the communication network 1004 is a broadcasting network. The example of FIG. 8 shows that an information provider can send only contents for user category (in this example, users living in the Hokkaido region), with network ID of 0x01, transponder ID of 0x02, and channel ID of 0x03, in a bandwidth of 0.5Mbps in a range between 2001/01/01 13:15 and 13:20.

FIG. 9 is a diagram showing an example of embodying a user information sending schedule DB 2025 in the broadcasting station or center system 1002. This example shows a user information sending schedule DB in the case where the communication network 1004 is the Internet. The example of FIG. 9 shows that user information having a user information ID of UI0001 can be sent to a receiving apparatus having a sending destination IP address of "202.202.2.168" from 2001/01/01 13:15.

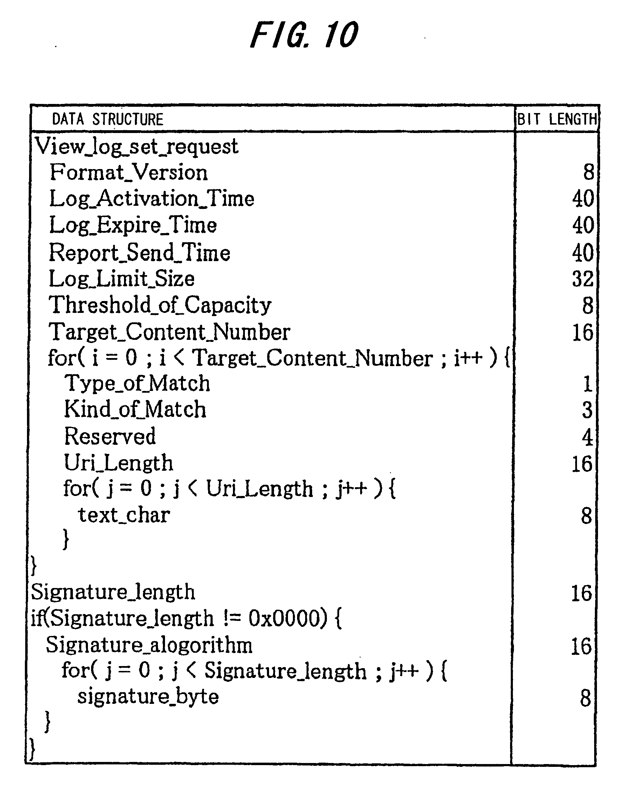

FIG. 10 is a diagram showing a first example of embodying personal information collection information sent from the broadcasting station or center system to the receiver 1003 in the embodiment. This example assumes that a viewing history acquisition instruction is sent to the receiver 1003 from the broadcasting station or center system 1002 as personal information collection information. Explanation of individual data shown in FIG. 10 follows. "Format_Version" indicates a format version of a viewing history collection start instruction.

"Log_Activation_Time" indicates a log collection start time.

"Log_Expire_Time" indicates a log collection end time.

"Report_Send_Time" indicates a log information sending time.

"Log_Limit_Size" indicates an upper limit size, in K bytes, of a viewing history file. When the size of a viewing history file exceeds the upper limit, viewing history recording is terminated.

"Threshold_of_Capacity" indicates a log information sending start time ratio in percent. When the ratio is exceeded, log information is sent before "Report_Send_Time" is reached.

"Target_Content_Number" indicates the number of contents patterns subject to viewing history recording.

"Type_of_Match" indicates collecting histories of matching URIs with "0" and mismatch URIs with "1".

"Kind_of_Match" indicates comparison with URI. "000" indicates perfect match and "001" indicates front match. "010" indicates regular expression and others indicate reserved.

"Uri_Length" indicates the length of a pattern of URI.

"text_char" indicates URI data.

"Signature_length" indicates the number of bytes of Signature_byte.

"Signature_algorithm" indicates the identification of a signature creating method (encryption method and hash method) used in Signature_byte. An identification system such as a signature creating method identification system (Cipher Suite) defined in the SSL version 3.0 specifications is used.

"Signature_byte" indicates a signature applied to the whole of "Command_data_byte" of an initialization start instruction.

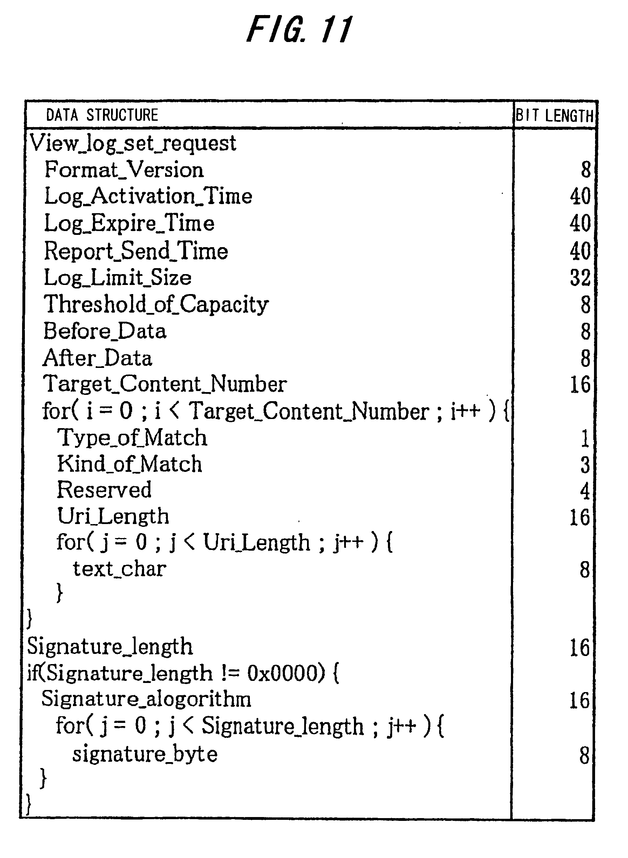

FIG. 11 is a diagram showing a second example of embodying personal information collection information sent from the broadcasting station or center system 1002 to the receiver 1003. FIG. 11 is almost the same as FIG. 10. A difference between the information structure shown in FIG. 10 and that shown in FIG. 11 is in the existence or absence of specification of whether data before and after target data is also registered in the personal information DB 3010, namely, the existence or absence of fields "Before_Data" and "After_Data".

"Before_Data" designates a flag specifying how many history levels of data before specified URI are to be collected. If this flag is 0, immediately preceding data is not collected. If this flag is 1, only immediately preceding data is collected.

"After_Data" designates a flag specifying the number of histories to be collected after specified URI. If this flag is 0, immediately following data is not collected. If this flag is 1, only immediately following data is collected.

Also for the information structure shown in FIG. 10, it may be specified in advance in the receiver 1003 how many history levels of data before and after target data is to be registered in the personal information DB 3010. In addition to various kinds of information shown in FIGS. 10 and 11, there may be described a destination of personal information, a method of compressing data to be sent, data format, and other information. A personal information sending time may be sent from the center aside from personal information collection information, or may be stored in the receiver 1003 as a fixed value. Plural sending schedules may be described. The following data shown in FIGS. 10 and 11 is data indicating targets from which to collect personal information and is called contents address data collection kind information:
from for (i=0; i<Target_Content_Number; I++) { to before Signature_length.

To the contents address data collection kind information, control information may be added to indicate overwrite, addition, deletion, or the like for contents address data collection kind information already stored in the receiver 1003. In FIGS. 10 and 11, data Type_of_Match is collection type information as described above. Kind_of_Match designates collection kind information. To reduce an information amount, information other than collection type information and collection kind information may be added to the contents address data collection kind information.

Collection kind information is not limited to perfect match, front match, and regular expression, which are described in FIGS. 10 and 11. For example, partial match and back match are also permitted. To plural pieces of contents address data collection kind information, logical information may be added, aside from e.g., collection type information and collection kind information. The logical information is information specifying whether, for contents address data collection information including plural pieces of collection type information and collection kind information, items satisfying all conditions or items satisfying at least one condition are targeted.

In the case where the personal information DB 3010 overflows in an information collecting part of the receiver 1003 as a terminal or its capacity is exceeded, new data may be discarded or older data may be discarded earlier. In the above case, an area may be additionally provided for buffering, or the setting information that, if a specified number of days elapse, relevant data may be deleted may be internally held so that old data is deleted by referring to the setting information. In the case where the above setting information is internally held, any setting method is permitted without being limited to a specific one.

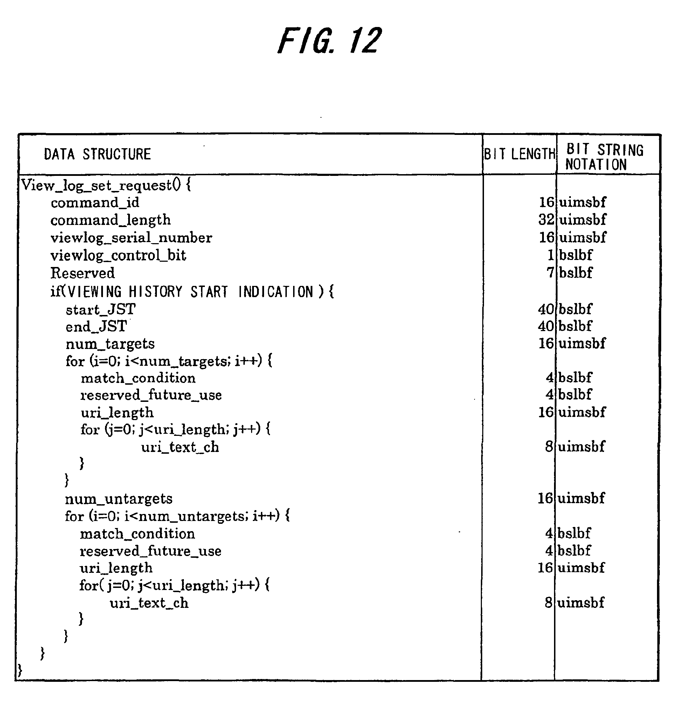

FIG. 12 is a diagram showing a third example of embodying personal information collection information sent from the broadcasting station or center system 1002 to the receiver 1003. This example shows personal information collection information when "Log_Limit_Size" has a fixed value in FIG. 10. Explanation of individual data shown in FIG. 12 follows. "command_id" is identification information for identifying a command that indicates a number identifying the type of a control instruction.

"command_length" indicates a command length and indicates the byte length of an instruction counted from immediately after the field.

"Viewing_serial_number" is data that indicates the serial number of a viewing history acquisition start instruction. This data is used when several start instructions are to be sent in advance to plural receivers 1003, or to judge whether the receivers 1003 accepted a same instruction. When plural pieces of "Viewing_serial_number" data are accepted and a contradiction occurs among them, priority and judgement criterion may be freely decided; a higher priority may be given to newer "Viewing_serial_number" data or earlier "start_JST" data (described later). "Viewlog_control_bit" indicates the operation control type of viewing history acquisition. This data is a value indicating whether the instruction is a viewing history start instruction or a viewing history end instruction previously sent to the receiver 1003. When "Viewlog_control_bit" is a viewing history start instruction, this field is followed by history collection information; when a viewing history end instruction, this field is not followed by history collection information. When receiving the viewing history end instruction, the receiver 1003 discards a corresponding viewing history start instruction of "Viewing_serial_number" if holding it. However, if collection is already started by the viewing history start instruction, the history collection may be immediately terminated, or the collection may continue up to a history collection end date. For immediate termination, information already collected may or may not be discarded.

"start_JST" indicates a history collection start date and is data corresponding to "Log_Activation_Time" in FIG. 10. If "start_JST" is earlier than the time when the receiver 1003 received a viewing history acquisition start instruction, the receiver 1003 may immediately start collection or discard the instruction.

"end_JST" indicates a history collection end date and is data corresponding to "Log_Expire_Time" in FIG. 10. If "end_JST" is already previous data, the instruction may be discarded.

"num_targets" indicates the number of target contents patterns and is data corresponding to "Target_Content_Number" in FIG. 10. This field specifies the number of URI patterns of contents subject to subsequent history collection. If "num_targets" is 0, all URIs are subject to viewing history collection.

"match_condition" indicates a match condition. This field specifies a condition of match between URI and URI pattern, and is data corresponding to "Kind_of_Match" in FIG. 10. Therefore, also in "match_condition", instead of specifying the above described match condition, the perfect match, front match, and regular expression notation may be used.

"url_Length" indicates the character string of a following URI and is data corresponding to "Uri_Length" in FIG. 10.

"url_text_ch" is an 8-bit field, and a character string appearing in a relevant area is a URI character string for judging whether history collection is required.

"num_untargets" indicates the number of patterns out of target. There are no limitations placed on the relationship between URIs specified by "num_targets" and "num_untargets". For example, this field specifies the number of URI patterns to be excluded from history collection targets, of URIs specified in "num_targets".

If the receiver 1003 cannot hold only one viewing history acquisition start instruction and receives a new control instruction when already holding a start instruction, the start instruction held may be discarded to receive the control instruction, or the receipt of the control instruction may be rejected to maintain the start instruction held.

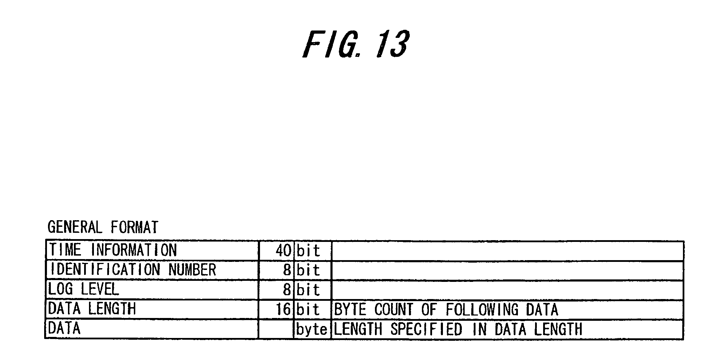

FIG. 13 is a diagram showing a common example of embodying personal information sent from the receiver 1003 to the broadcasting station or center system 1002. Time information is a time when the personal information is received by the information collecting part, an identification number is identification information used to sort personal information, and a log level is information indicating importance of the information.

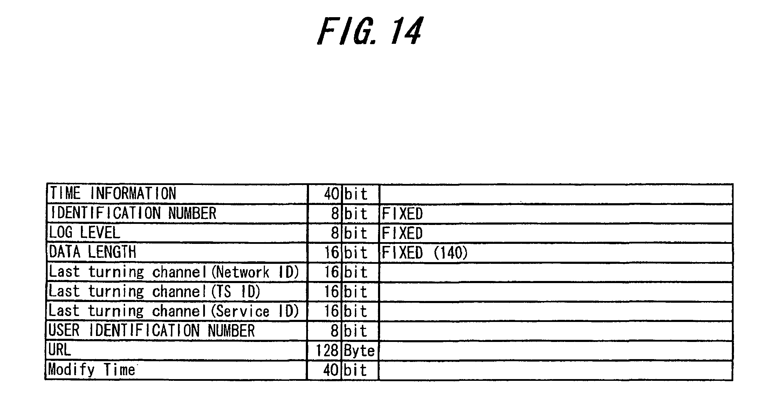

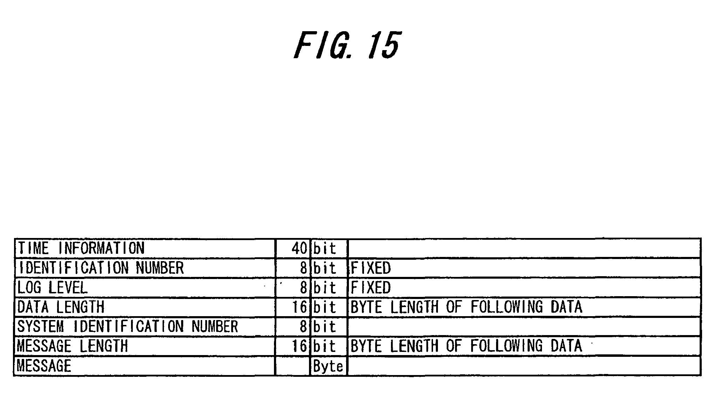

FIG. 14 is a diagram showing the example of embodying personal information shown in FIG. 13, limited to history information. In this example, the URI (Universal Resource Identifier) of contents presented to a viewer in the receiver 1003 is recorded in the URL attribute value, the creation (modification) time of the contents is recorded in the Modify Time attribute value, the identification number of the viewer is recorded in the user identification number attribute value, and the network ID (Last tuning channel Network ID), transponder ID (Last tuning channel TS ID), and service ID (Last tuning channel Service ID) of a program viewed immediately before the presented contents are recorded in the respective attribute values. FIG. 15 is a diagram showing the example of embodying personal information shown in FIG. 13, limited to system messages of the various functions and programs 3012. A system identification number is identification information indicating from which function and program 3012 the message is outputted.

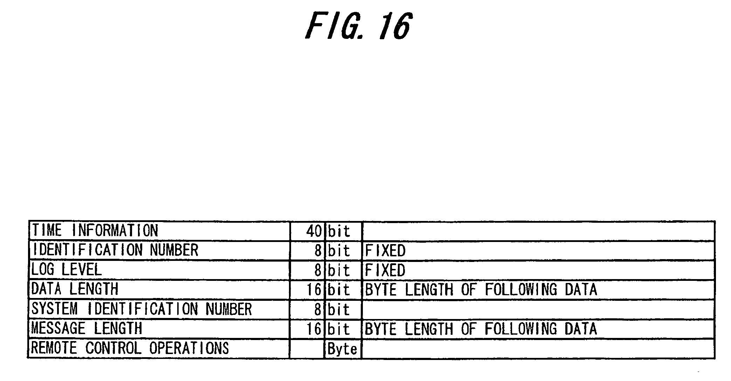

FIG. 16 is a diagram showing the example of embodying personal information shown in FIG. 13, limited to remote control operations of the receiver 1003.

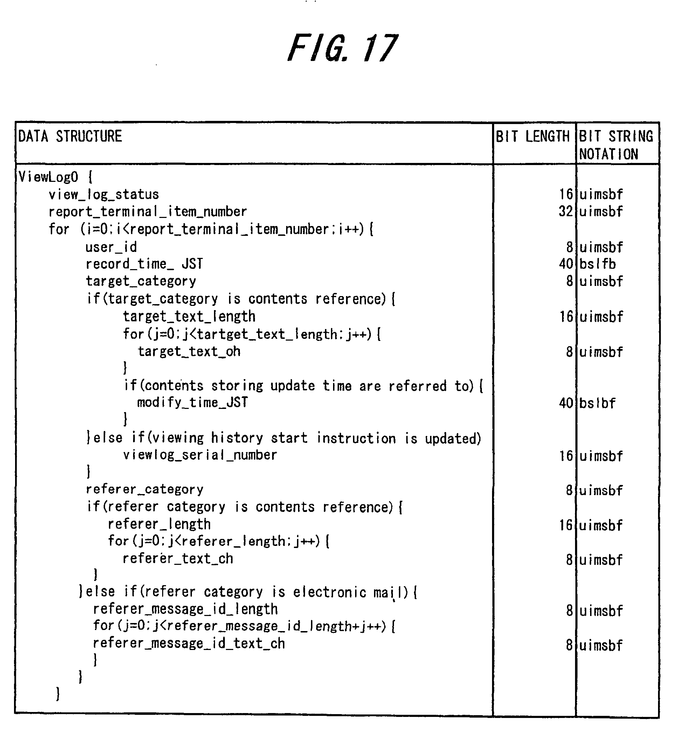

FIG. 17 is a diagram showing an example of embodying personal information sent to the broadcasting station or center system 1002 from the receiver 1003 that is different from the personal information shown in FIGS. 13 to 16. FIG. 17 shows an example of embodying personal information in the same format as the examples shown in FIGS. 10 to 12. Explanation of individual data shown in FIG. 17 follows. "view_log_status" is data indicating error information at the time of storage in viewing history information. "view_log_status" may set error information on a bit basis or in all. Where error information of the receiver 1003 is set on a bit basis, a particular bit, if set, may indicate that the capacity of a viewing history area overflowed or an error occurred in writing to a viewing history area (personal information DB) . Or it may indicate that a new instruction was received during collection by a viewing history collection start instruction. "report_terminal_item_number" is data indicating the number of items of viewing history information immediately following this field.

"user_id" is data indicating user information of operation immediately before viewing history information was recorded.

"record_time_JST" is data indicating a date when transition was made to a transition destination.

"target_category" is data indicating the category of recorded transition destination or the category of special processing on a terminal. The "target_category" may indicate not only items described here but also any contents usable in the receiver 1003. It may be indicated in this field that a new instruction was received during collection by a viewing history collection start instruction. In addition to contents, when ordinary programs were viewed, this field may indicate ordinary program viewing. In this case, information of "Last tuning channel (Network ID)", "Last tuning channel (TS ID)", and "Last tuning channel (Service ID)" may be sent to the broadcasting station or center system 1002 from the receiver 1003, or "Last tuning channel (Event ID)" maybe added for sending. In addition to contents, when ordinary programs were viewed, this field may indicate ordinary program viewing. Examples of category include contents DB, storage medium, and acquisition via communications and realtime data broadcast contents in the case where the receiver 1003 obtains contents via communications. Electronic mail may also be included.

"target_text_length" is data indicating the byte length of a following transition destination character string.

"target_text_ch" is data indicating that a relevant area is a character string identifying a transition destination.

"modify_time_JST" is data indicating an update time of contents wherein a transition destination is the contents stored in a provider area.

"viewlog_serial_number" is data indicating the serial number of a viewing history acquisition start instruction.

"referer_category" is data indicating the category of a recorded transition source. The "referer_category" indicates various contents like the "target_category". If "referer" does not exist, the fact may be indicated. Where the user inputs URI from remote control or keyboard, data indicating the fact may be indicated.

"referer_length" is data indicating the byte length of a following transition source character string.

"referer_text_ch" is data indicating that a relevant area is a character string identifying a transition source.

"referer_message_id_length" is data indicating the byte length of a following transition source message ID character string. "referer_message_id_text_ch" is data indicating that a relevant area is the character string of a mail message ID identifying mail of a transition source.

In the case where personal information is sent to the broadcasting station or center system 1002 from the receiver 1003, when the receiver 1003 fails in sending viewing history data to the broadcasting station or center system 1002, the data may be resent or deleted. Or the data may be sent together with other data at the time of next sending.

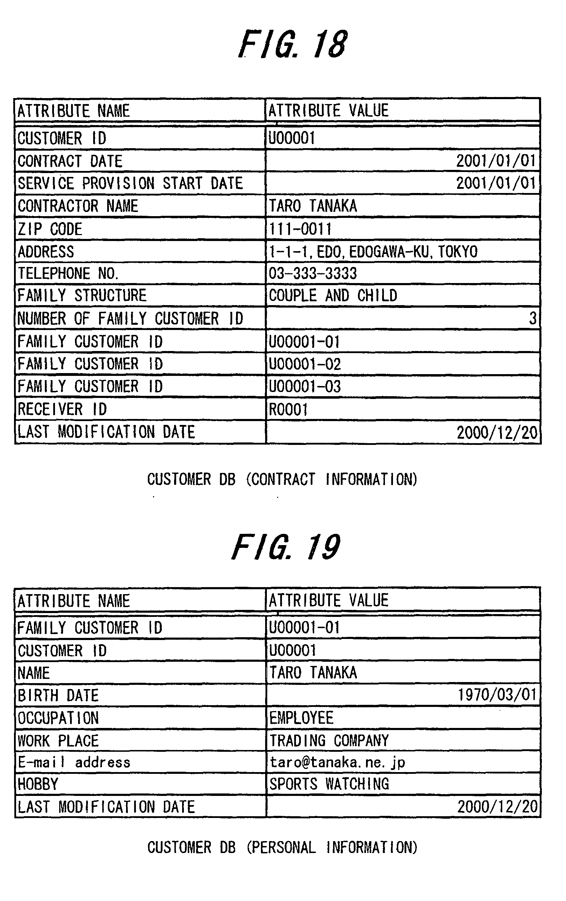

FIGS. 18 and 19 are diagrams showing an example of embodying the customer DB 2015 in the broadcasting station or center system 1002. Although, in this example, contract information and personal information are managed as different types of information, the present invention does not limit the customer DB to this configuration.

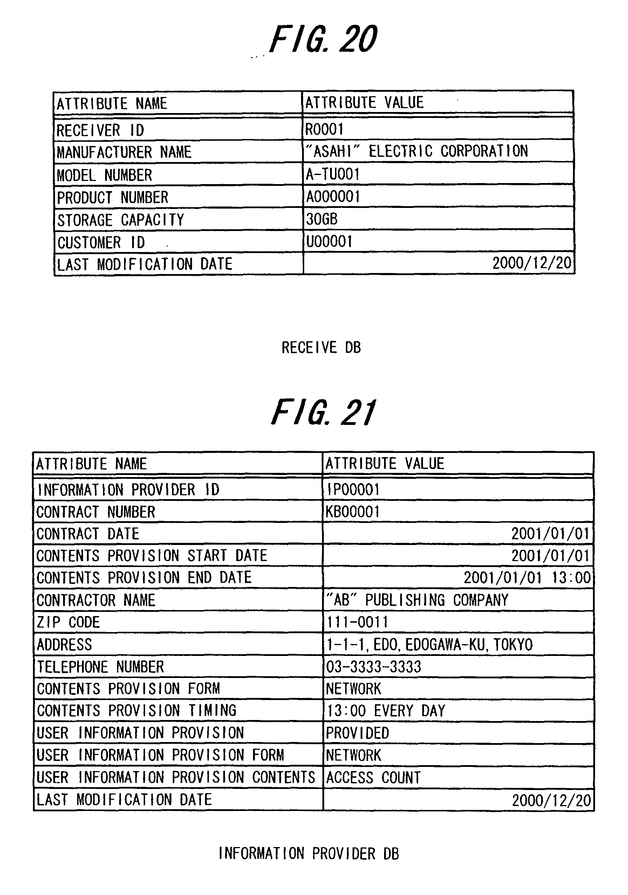

FIG. 20 is a diagram showing an example of embodying the receiver DB 2014 in the broadcasting station or center system 1002. This example shows that the receiver is owned by a customer having a customer ID of U0001 and includes a storage unit having a capacity of 30GB. FIG. 21 is a diagram showing an example of embodying the information provider DB 2016 in the broadcasting station or center system 1002. This example shows that the information provider 1001 makes a contract at January 1, 2001, and contents are provided to the broadcasting station or center system 1002 from January 1, 2001 to December 31, 2001. It also shows that contents are provided at 13:00 every day via the Internet. It also shows that information of the number of accesses to URIs is provided as user information.

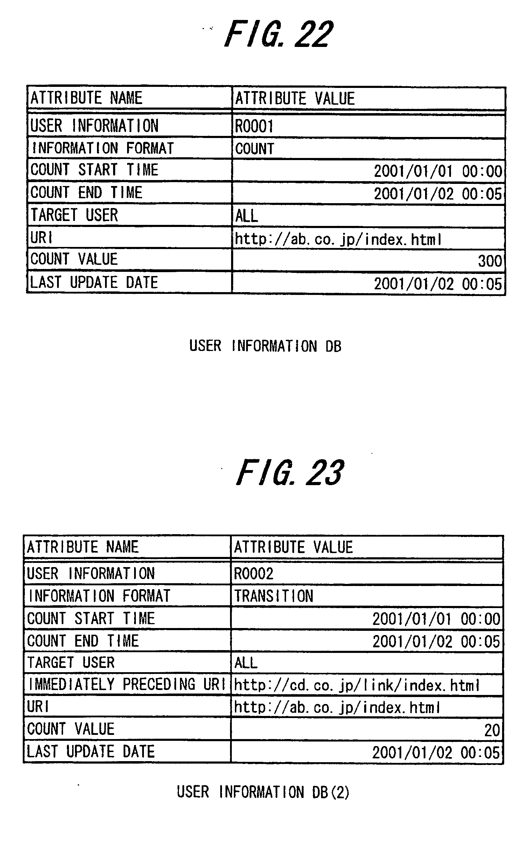

FIG. 22 is a diagram showing an example of embodying the user information DB 2025 in the broadcasting station or center system 1002. This example shows that the number of accesses to http://ab.co.jp/index.html between 2001/01/01 00:00 to 2001/01/02 00:05 from all users is 300. FIG. 23 is a diagram showing an example of embodying the user information DB 2025 in the broadcasting station or center system 1002, like FIG. 22. This example shows that the number of accesses to http://ab.co.jp/index.html immediately after access to http://cd.co.jp/link/index.html between 2001/01/01 00:00 to 2001/01/02 00:05 from all users is 20.

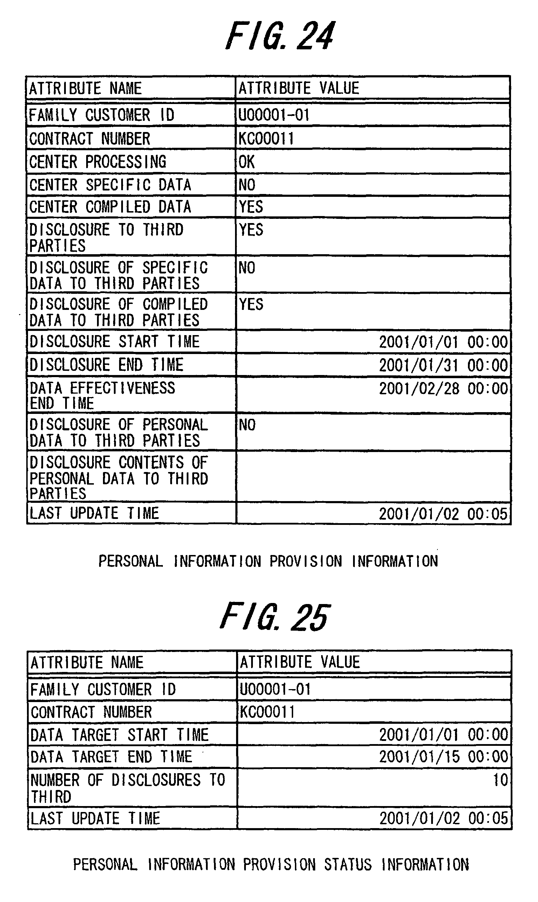

FIG. 24 is a diagram showing a example of embodying personal information provision information sent from the receiver 1003 to the broadcasting station or center system 1002, and a personal information provision information DB 2013 in the broadcasting station or center system 1002. In this example, the user admits that personal information is processed in the broadcasting station or center system 1002 on the condition that unprocessed data of the personal information must not be used and the personal information can be used only for compilation such as access count determination. Also, the user admits disclosure to an information provider, buts does not admit disclosure of unprocessed data of personal information, and admits disclosure of only compilation results such as access count determination. Collection of personal information is limited to a period from 2001/01/01 00:00 to 2001/01/31 00:00, and information stored in the broadcasting station or center system 1002 can be used only until 2001/02/28 00:00. Also, the user does not admit disclosure of personal data, more specifically, customer DB information to the information provider.

FIG. 25 is a diagram showing a example of embodying personal information provision status information sent to the receiver 1003 from the broadcasting station or center system 1002. This example indicates that user information using personal information is disclosed to an information provider 10 times between 2001/01/01 00:00 and 2001/01/15 00:00.

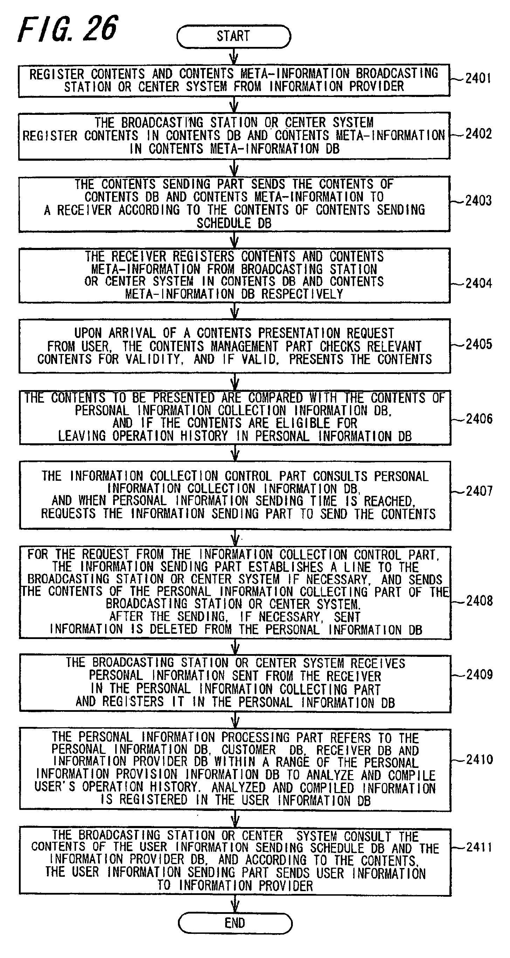

FIG. 26 is a flowchart for explaining the operation of an entire system of the present invention. In the flowchart, in processing step (hereinafter simply referred to as step) 2401, contents and contents meta-information are registered in the broadcasting station or center system 1002 from the information provider 1001. The registered contents are stored in the contents DB 2004 by the contents management part 2001, and the contents meta-information is stored in the contents meta-information DB 2003 (step 2402). The contents sending part 2002 consults the contents of the contents sending schedule DB 2006 and extracts the next schedule information to be sent. Next, contents to be sent are decided according to the extracted schedule information, and the contents DB 2004 and the contents meta-information DB 2003 are extracted through the contents management part 2001. The extracted contents and contents meta-information are sent to the receiver via the communication network 1004, based on the schedule information (step 2403).

Next, the receiver 1003 receives the contents and contents meta-information sent from the broadcasting station or center system in the contents receiving part 3001, and the contents are stored in the contents DB 3002 and the contents meta-information is stored in the contents meta-information DB 3003 (step 2404). Upon arrival of a contents presentation request from a user, the contents management part 3004 extracts contents meta-information corresponding to relevant contents from the contents meta-information DB 3003, and judges whether to present them to the user. If the contents may be presented, the contents are extracted from the contents DB 3002 and presented to the user from the contents presenting part 3012 (step 2405). For the presented contents, the information collecting part 3007 refers to the personal information collection information DB 3009 and judges whether to store the contents in the personal information DB 3010. Upon judging that the contents may be stored, the information collecting part 3007 stores personal information in the personal information DB 3010 (step 2406).

The information collection control part 3008 consults information collection control part 3008 consults the personal information collection information DB 3009, and requests the information sending part 3011 to send the contents of the personal information DB 3010 to the broadcasting station or center system when a personal information sending time is reached (step 2407). For the sending request from the information collection control part 3008, the information sending part 3011 establishes a line (communication line) to the broadcasting station or center system 1002 if necessary, and sends the contents of the personal information DB 3010 to the personal information collecting part 2019 of the broadcasting station or center system. After the sending, if necessary, the line (communication line) is released. Also, after the sending, if necessary, sent information of information stored in the personal information DB 3010 is deleted from the personal information DB 3010 (step 2408).

The personal information of the broadcasting station or center system 1002 sent from the receiver 1003 is received in the personal information collecting part 2019 and registered in the personal information DB 2021 (step 2409). At a predetermined time or according to a request from the administrator of the broadcasting station or center system 1002, the personal information processing part 2023 refers to at least one of the personal information DB 2021, customer DB 2015, receiver DB 2014, and information provider DB 2016 within a processing range of personal information registered in the personal information provision information DB 2013 to analyze and compile user's operation history. Compiled information is registered in the user information DB 2024. For users of information used for the compilation, the contents of used information are registered in personal information provision information (step 2410). Compilation is performed by user, user age, user occupation, user sex, user location, user family structure, use time, receiver manufacturer, receiver model, receiver storage capacity, information provider, and contents. The broadcasting station or center system 1002 consults the contents of the user information sending schedule DB 2025 and, according to the schedule of the user information sending schedule DB 2025, the user information sending part 2026 sends the contents of the user information DB 2024 to the information provider 1001 (step 2411).

Although the present invention has been described based on preferred embodiments shown in the accompanying drawings, it is apparent that those skilled in the art can make various changes and modifications without departing from the spirit and scope of the present invention. The present invention also includes such changed embodiments.

## Claims

1. A center system apparatus including a personal information collection information creating part that creates personal information collection information specifying at least one piece of information to be sent to a center for a terminal.

2. The center system apparatus according to claim 1, including a personal information collection information sending part that sends personal information collection information to a terminal.

3. The center system apparatus according to claim 1, wherein the personal information collection information is information describing information to be collected in the terminal.

4. The center system apparatus according to claim 1, wherein the personal information collection information is information describing information about a method of sending information collected in the terminal to the center.

5. The center system apparatus according to claim 1, wherein personal information collection information different for a different terminal can be sent.

6. A receiving terminal device including an information collecting part that collects terminal information, based on personal information collection information sent from a center.

7. The receiving terminal device according to claim 6, including an information sending part that sends collected information to the center, based on the personal information collection information.

8. The receiving terminal device according to claim 6, wherein information to be collected in the terminal can be specified by a user of the terminal.

9. The receiving terminal device according to claim 6, wherein information to be collected in the terminal is limited to information within a range admitted by the user of the terminal.

10. The receiving terminal device according to claim 6, wherein collected information can be sent to the center again when unsuccessfully sent.

11. A center system apparatus that processes information sent from a receiver within a range admitted by a user of a terminal.

12. The center system apparatus according to claim 11, wherein processed information is sent to the terminal.

13. A center system apparatus that includes a database storing information sent from a receiver, and includes a personal information management part that controls access to the database.

14. A center system apparatus that includes a database storing the results of processing information sent from a receiver, and includes a personal information management part that controls access to the database.

15. A viewing history apparatus that pays an information provision fee to a user of a terminal, corresponding to a range admitted by the user of the terminal.

16. The viewing history apparatus according to claim 15, wherein a larger information provision fee is paid for a wider range admitted by the user of the terminal.

17. A viewing history using system that uses a transmission line to send and receive data, wherein:
a data sending part of the viewing history using system comprises a personal information collection information creating part that creates and manages personal information collection information specifying a personal information collection range, and a data transmitting part that controls and sends the personal information collection information; and
a receiving terminal to receive the personal information collection information sent from the data sending part comprises an information collecting part that uses the personal information collection information to determine a personal information collection range in the receiving terminal and collect personal information according to the determination result, and a personal information sending part that sends the collected personal information to the data sending part.

18. The viewing history using system according to claim 17 that uses a transmission line to send and receive data, wherein the data sending part of the viewing history using system includes a personal information provision fee control part that pays a personal information provision fee when personal information is provided from the receiving terminal.

19. The viewing history using system according to claim 17 that uses a transmission line to send and receive data, wherein the data sending part of the viewing history using system includes the personal information provision fee control part that pays a personal information provision fee according to a personal information collection range when personal information is provided from the receiving terminal.

20. The viewing history using system according to claim 17 that uses a transmission line to send and receive data, wherein the data sending part of the viewing history using system, when the receiving terminal sends personal information collected in the receiving terminal to the data sending part, sends sending time data indicating the personal information sending time to the receiving terminal.

21. The viewing history using system according to claim 17 that uses a transmission line to send and receive data, wherein, when sending collected personal information to the data sending part, the receiving terminal adds personal information sending time data as well.

22. The viewing history using system according to claim 17 that uses a transmission line to send and receive data, wherein, when sending the collected personal information to the data sending part, the receiving terminal adds contents address data pointing to the location of a user-accessed information resource as well.

23. The viewing history using system according to claim 22 that uses a transmission line to send and receive data, wherein, when sending the collected personal information to the data sending part, the receiving terminal fetches contents address data collection kind information indicating whether to fetch information perfectly or partially matching the contents address data from the personal information collection information received from the data sending part, and according to the contents address data collection kind information, collects and adds contents address data to the personal information.

24. The viewing history using system according to claim 22 that uses a transmission line to send and receive data, wherein, when sending the collected personal information to the data sending part, the receiving terminal fetches contents address data collection type information indicating whether to fetch information matching or not matching the contents address data from the personal information collection information received from the data sending part, and according to the contents address data collection type information, collects and adds contents address data to the personal information.

25. The viewing history using system according to claim 22 that uses a transmission line to send and receive data, wherein, when sending the collected personal information to the data sending part, the receiving terminal adds user identification data indicating who accessed contents data indicated by the contents address data as well.

26. The viewing history using system according to claim 17 that uses a transmission line to send and receive data, wherein the data sending part of the viewing history using system includes a personal information provision status information creating part that, when personal information is provided from the receiving terminal, creates and manages personal information provision status information indicating a personal information provision status.

27. A viewing history using system that uses a transmission line to send and receive data, wherein a data sending part to send data to a receiving terminal comprises a personal information collection information creating part that creates and manages personal information collection information specifying a personal information collection range, and a data transmitting part that controls and sends the personal information collection information.

28. The viewing history using system according to claim 27 that uses a transmission line to send and receive data, wherein the data sending part includes a personal information provision fee control part that pays a personal information provision fee when personal information is provided from the receiving terminal.

29. The viewing history using system according to claim 27 that uses a transmission line to send and receive data, wherein the data sending part includes the personal information provision fee control part that pays a personal information provision fee according to a personal information collection range when personal information is provided from the receiving terminal.

30. The viewing history using system according to claim 27 that uses a transmission line to send and receive data, wherein the data sending part includes a personal information provision status information creating part that, when personal information is provided from the receiving terminal, creates and manages personal information provision status information indicating a personal information provision status.

31. A viewing history using system that comprises a data sending part and a receiving terminal to receive data sent from the data sending part, and uses a transmission line to send and receive data, wherein the receiving terminal to receive personal information collection information specifying a range of collecting personal information sent from the data sending part includes an information collecting part that uses the personal information collection information to determine a personal information collection range in the receiving terminal and collect personal information according to the determination result, and a personal information sending part that sends the collected personal information to the data sending part.

32. The viewing history using system according to claim 31 that uses a transmission line to send and receive data, wherein the data sending part of the viewing history using system, when the receiving terminal sends personal information collected in the receiving terminal to the data sending part, sends sending time data indicating the personal information sending time to the receiving terminal.

33. The viewing history using system according to claim 31 that uses a transmission line to send and receive data, wherein, when sending collected personal information to the data sending part, the receiving terminal adds personal information sending time data as well.

34. The viewing history using system according to claim 31 that uses a transmission line to send and receive data, wherein, when sending the collected personal information to the data sending part, the receiving terminal adds contents address data pointing to the location of a user-accessed information resource as well.

35. The viewing history using system according to claim 34 that uses a transmission line to send and receive data, wherein, when sending the collected personal information to the data sending part, the receiving terminal fetches contents address data collection kind information indicating whether to fetch information perfectly or partially matching the contents address data from the personal information collection information received from the data sending part, and according to the contents address data collection kind information, collects and adds contents address data to the personal information.

36. The viewing history using system according to claim 34 that uses a transmission line to send and receive data, wherein, when sending the collected personal information to the data sending part, the receiving terminal fetches contents address data collection type information indicating whether to fetch information matching or not matching the contents address data from the personal information collection information received from the data sending part, and according to the contents address data collection type information, collects and adds contents address data to the personal information.

37. The viewing history using system according to claim 34 that uses a transmission line to send and receive data, wherein, when sending the collected personal information to the data sending part, the receiving terminal adds user identification data indicating who accessed contents data indicated by the contents address data as well.

38. The center system apparatus according to claim 4, wherein the method of sending to the center is sending destination information.

39. The center system apparatus according to claim 4, wherein the method of sending to the center is the format of a file to be sent.

40. The receiving terminal device according to claim 6, wherein, when the storage capacity of a storage unit to store collected information overflows, information collection is stopped.
